(19) Europäisches Patentamt
European Patent Office
Office européen des brevets

(11) Numéro de publication: **0 221 877 B1**

(12) **FASCICULE DE BREVET EUROPEEN**

(45) Date de publication de fascicule du brevet: **01.04.92**

(51) Int. Cl.[5]: **C09D 133/06**, C08L 33/06

(21) Numéro de dépôt: **86870158.2**

(22) Date de dépôt: **28.10.86**

(54) **Peintures primaires.**

(30) Priorité: **31.10.85 LU 86148**

(43) Date de publication de la demande:
**13.05.87 Bulletin 87/20**

(45) Mention de la délivrance du brevet:
**01.04.92 Bulletin 92/14**

(84) Etats contractants désignés:
**AT BE CH DE ES FR GB IT LI NL SE**

(56) Documents cités:
**DE-A- 1 519 282**

(73) Titulaire: **FINA RESEARCH S.A.**
**Zone Industrielle C**
**B-7181 Feluy(BE)**

(72) Inventeur: **Vranken, Paul**
**Serge Ecksteinlaan 25**
**B-1730 Zellik(BE)**
Inventeur: **Braeken, Jozef**
**Lindestraat 88**
**B-9470 Denderleeuw(BE)**

(74) Mandataire: **Leyder, Francis**
**c/o Fina Research S.A. Zone Industrielle C**
**B-6520 Feluy (Feluy)(BE)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services

## Description

La présente invention se rapporte à une nouvelle peinture primaire et plus particulièrement à des peintures primaires améliorées destinées à être utilisées pour lier les revêtements de résines vinyliques à différents types de matériaux, notamment les matériaux métalliques.

Lorsque l'on doit appliquer une couche d'une dispersion de résine vinylique sur un matériau métallique, il est bien connu d'appliquer d'abord sur ce matériau une couche de peinture primaire qui sert en quelque sorte de liant entre le matériau et la dispersion de résine vinylique.

Depuis plusieurs décennies, on s'est attaché à développer différents types de peintures primaires ayant une bonne adhérence au matériau, mais donnant également une bonne adhérence à la couche de dispersion de résine vinylique. Au début, ces peintures primaires étaient à base de résines méthacryliques, mais l'adhérence de ce type de peinture à la résine vinylique est relativement faible dû au fait que à haute température, les plastifiants de la dispersion vinylique solubilisent la peinture primaire ce qui nuit dès lors à l'adhérence du système. On a proposé alors d'utiliser comme peintures primaires des compositions thermodurcissables qui résultent le plus souvent du mélange entre la résine méthacrylique et une résine époxy, activée au moyen d'un durcisseur polyamine.

On a également développé d'autres systèmes de peinture primaire, qui sont d'ailleurs encore utilisés à l'heure actuelle et qui consistent en des combinaisons de résines méthacryliques, de résines époxydiques et de résines phénoliques, ou encore des combinaison de résines méthacryliques avec des résines époxy-phénoliques.

Avec ce système, l'adhérence a été considérablement accrue. Cependant, depuis quelques années, on a tendance à vouloir utiliser des dispersions de résines qui donnent des films de peinture à haute résistance mécanique. L'orientation vers ces films à plus haute résistance mécanique provient du fait que dans le domaine des tôles revêtues, on effectue le prélaquage avant le profilage de ces mêmes tôles. Or, lors du profilage, on a constaté que la surface revêtue de la tôle était griffée, ce qui constitue un inconvénient non négligeable. Afin de remédier à cet inconvénient, on a proposé d'utiliser des dispersions de résines vinyliques qui donnent des films de peinture à plus haute résistance mécanique.

Or, on a constaté qu'avec ce nouveau type de dispersion de résine vinylique l'adhérence du système peinture primaire, dispersion de résine n'était plus suffisante. Ce fait semble dû en partie à la plus forte cohésion de la dispersion de la résine vinylique qui facilite son propre décollement.

Généralement, l'adhérence entre la peinture primaire et la dispersion de résine vinylique, habituellement un plastisol, dépendent de plusieurs facteurs, comme par exemple leur nature, leur proportion, la nature des plastifiants utilisés, l'épaisseur de la couche, le temps de cuisson qui peut varier dans de larges limites selon les applications comme tôles revêtues ou autres.

Lorsque l'on emploie des peintures primaires usuelles, on constate que même en adaptant leur composition à tous ces paramètres, on ne parvient plus à obtenir une adhérence satisfaisante lorsque l'on utilise des plastisols à haute résistance mécanique.

Il serait par conséquent souhaitable de posséder une peinture primaire qui donne des résultats satisfaisants avec une large gamme de dispersions de résine vinylique.

Il devenait également impératif, particulièrement dans le domaine des tôles revêtues, de trouver une nouvelle composition de peinture primaire qui ait une adhérence suffisante à la couche de dispersion de résine vinylique à haute résistance mécanique, tout en maintenant l'adhérence du système complet à un niveau approprié.

La présente invention a pour but une telle composition de peinture primaire.

La présente invention a pour objet une peinture primaire qui possède une bonne adhérence à la couche de résine vinylique.

La présente invention a pour objet une peinture primaire telle que l'adhérence du système complet, tôle, primaire peinture vinylique soit appropriée.

La présente invention a pour objet une composition de peinture primaire qui assure également une bonne protection contre la corrosion.

La présente invention a également pour objet une peinture primaire qui s'adapte à une plus large gamme de peintures vinyliques à différents temps de cuisson et à différentes épaisseurs de couche de résine vinylique.

La composition de la peinture primaire de l'invention adaptée aux dispersions de résine vinylique à haute résistance mécanique comprenant un mélange d'une résine (méth)acrylique thermoplastique et d'un dérivé phénolique ci-après "résine phénolique" est caractérisée en ce que la résine phénolique est choisie parmi celles dont la formule générale est

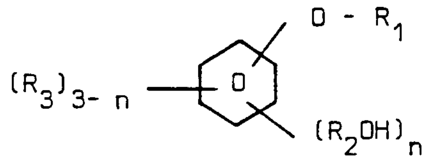

(I)

dans laquelle

$R_1$ est un radical allyleou alkényle ayant de 4 à 7 atomes de carbone,

$R_2OH$ est un radical hydroxyalkyle ayant de 1 à 6 atomes de carbone,

$R_3$ est H ou un radical alkyle ayant de 1 à 3 atomes de carbone et n = 1 - 3.

Les peintures primaires de l'invention sont particulièrement utilisées pour lier une couche d'une dispersion de résine vinylique sur un support métallique. Ces dispersions de résine vinylique comprennent les plastisols, qui consistent en une dispersion pâteuse d'une résine vinylique, comme le polychlorure de vinyle, dans un plastifiant, et les organosols qui consistent en une dispersion pâteuse de ces résines vinyliques dans un plastifiant et un diluant.

A l'heure actuelle, on utilise de plus en plus des plastisols ayant des propriétés mécaniques améliorées, pour les raisons déjà énoncées plus avant. Or avec de tels plastisols, l'adhérence du système n'est plus assurée.

Ces plastisols à haute résistance mécanique sont obtenus en assurant une bonne fusion ou solubilisation des particules de PVC dans les plastifiants. Cette fusion est d'autant plus favorable que la granulométrie de la dispersion de la résine vinylique est plus fine. Ces plastisols à haute résistance mécanique sont rarement obtenus au départ d'une seule résine vinylique de granulométrie fine à cause de la viscosité qui augmente considérablement, jusqu'à obtenir des dispersions tellement visqueuses qu'elles deviennent rigides. La plupart du temps ces plastisols à haute résistance mécanique sont obtenus à partis de dispersion de résines de granulométrie différente. Les caractéristiques de ces plastisols sont surtout assurées par

- le choix de la granulométrie de la résine, qui doit être aussi fine que possible
- le poids moléculaire de la résine
- la nature et le choix des plastifiants qui sont utilisés à raison de 35 à 60 parties pour 100 parties de résine.

La Demanderesse a maintenant trouvé qu'avec une peinture primaire de composition particulière, on améliorait considérablement l'adhérence du système, aussi bien son adhérence propre que son adhérence au support métallique.

La composition de peinture primaire de l'invention comprend tout d'abord un liant consistant en :

a) une résine (méth)acrylique thermoplastique, pour une majeure partie. Il faut cependant noter que cette résine est obtenue par (co)polymérisation d'un monomère du type méthacrylate d'alkyle pour au moins 75 % en poids, le reste étant constitué d'un ou plusieurs autres comonomères à insaturation éthylénique, le plus souvent de type (méth)acrylique.

Comme exemples de telles résines, on peut notamment citer le polyméthylméthacrylate, les copolymères acrylate d'éthyle/méthacrylate de méthyle, méthacrylate de butyle/méthacrylate de méthyle, et des copolymères de méthacrylate d'isobutyle/méthacrylate de méthyle.

Le plus souvent le liant contiendra au moins 50 % et même au moins 65 % de cette résine méthacrylique.

b) Le liant comprend ensuite une résine phénolique de formule générale

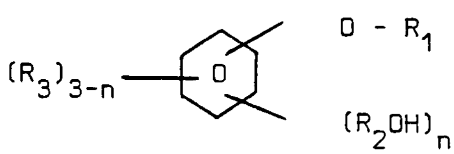

(I)

dans laquelle

$R_1$ est un radical allyle ou alkényle ayant de 4 à 7 atomes de carbone,

$R_2OH$ est un radical hydroxyalkyle ayant de 1 à 6 atomes de carbone, mais le plus souvent un radical hydroxyméthyle,

$R_3$ est H ou un radical alkyle ayant de 1 à 3 atomes ce carbone et n = 1 - 3.

On peut également utiliser comme résine phénolique, un dimère ou un oligomère du composé de formule générale (I), obtenu par condensation sur le radical ($R_2OH$). A titre d'exemples typiques de résine phénolique on peut citer le mélange d'allyl éther de méthylol phénol (produit notamment vendu sous la dénomination ORSOL de la Société Française d'Organo Synthèse, ou encore sous la dénomination Methylon 75.108 de la Société General Electric). Dans la peinture de l'invention, la résine phénolique est généralement présente en quantité telle que le rapport pondéral résine méthacrylique/résine phénolique est compris entre 90:10 et 70:30.

La Demanderesse a également trouvé que le liant de la peinture primaire pourait également contenir un polyisocyanate bloqué, qui va réagir avec la résine phénolique, et va encore améliorer les propriétés d'adhérence de la peinture primaire.

Les polyisocyanates bloqués sont obtenus par les techniques usuelles qui consistent à faire réagir les fonctions isocyanates du polyisocyanate avec un phénol, un caprolactame ou autres agents bloquants analogues. A titre d'exemples de polyisocyanates, on peut notamment citer les polyisocyanates cycloaliphatiques dont le radical aliphatique a de 4 à 10 atomes de carbone, comme par exemple l'isophorone diisocyanate. Comme autres polyisocyanates , on peut citer le triméthyl hexaméthylène diisocyanate, l'hexaméthylène diisocyanate dimère ou trimère, le toluène diisocyanate, le diisocyanate de diphénylméthane, ou les polyisocyanates de poids moléculaire plus élevé, moins volatils, que l'on obtient soit par réaction de polyol ou d'eau et d'un excès de polyisocyanate, soit par trimérisation (formation d'isocyanurate).

Les polyisocyanates bloqués peuvent être représentés notamment par leur teneur en NCO. Dans le cas particulier de l'invention, on a constaté qu'il était intéressant d'utiliser des polyisocyanates bloqués dont la teneur en groupements NCO est comprise entre 5 % et 30 %.

Si on utilise des polyisocyanates bloqués dont la teneur en NCO est trop faible, cela conduit à devoir utiliser une trop grande quantité de polyisocyanate dans le liant, ce qui nuit aux propriétés.

Dans le liant de la peinture primaire de l'invention, on utilise ces polyisocyanates bloqués dont la teneur en groupement NCO a été définie ci-dessus, en une quantité telle que le rapport pondéral polyisocyanate bloqué/résine phénolique soit compris entre 10:90 et 50:50.

La Demanderesse a constaté que les compositions de peinture primaire contenant des polyisocyanates bloqués étaient particulièrement efficaces dans le domaine de la tôle revêtue.

Cependant, compte-tenu des temps de cuisson extrêmement courts qui sont pratiqués dans ce domaine de la tôle revêtue, la Demanderesse a trouvé, que pour maintenir les propriétés de la peinture primaire à un niveau adéquat, il fallait que les différents constituants du liant réagissent en présence d'un catalyseur usuel de formation de polyuréthane par réaction d'un polyisocyanate avec un polyol.

A titre d'exemples de catalyseurs, on peut citer le di-laurate de di-n-butyl étain, le distearate de di-n-butyl étain, le dioléate de di-n-butyl étain, le di-oxalate de di-n-butyl étain, le di-isodecanoate de di-n-butyl étain, le di-acétate de di-n-butyl étain, les octoates ou naphténates de zinc, de cobalt ou de plomb.

On peut également utiliser comme catalyseur l'oxyde de dibutyl étain.

Généralement on utilise une quantité de catalyseur comprise entre 5 et 33 % en poids, basé sur le polyisocyanate.

Pour préparer la peinture primaire, on broye la résine méthacrylique thermoplastique en présence de pigments et autres additifs usuels, dans un broyeur à billes à maximum 40 °C pendant 10 à 30 min.; la phase broyée est complétée au moyen des autres résines, notamment la résine phénolique, le polyisocyanate bloqué ainsi que le catalyseur. On adapte la viscosité de la peinture au moyen du diluant utilisé. La peinture ainsi préparée est stable à température ambiante et même jusqu'à 40 °C.

Généralement, dans les peintures primaires de l'invention, la proportion de résine acrylique par rapport à la résine phénolique est telle que l'on ait un rapport pondéral compris entre 90:10 et 70:30 et de préférence entre 80:20 et 75:25.

La Demanderesse a remarqué que si la quantité de résine acrylique était supérieure à 90 % , il y avait un décollement de la couche de peinture, c'est-à-dire que l'adhérence est notablement réduite.

Selon la composition de peinture primaire de l'invention, la quantité de polyisocyanate bloqué par rapport à la résine phénolique est généralement comprise entre 10:90 et 50:50, et de préférence entre 20:80 et 30:70. On a constaté que la présence du polyisocyanate dans la composition de la peinture primaire avait une grande influence sur les propriétés d'adhérence de la peinture au support métallique et à la couche de plastisol dans le domaine de la tôle revêtue.

Si on utilise une quantité trop importante de polyisocyanate, les propriétés mécaniques du revêtement diminuent jusqu'à devenir très mauvaises.

Le mélange de résine est introduit dans un solvant organique qui est de préférence un mélange d'alkyle cétones, d'hydrocarbures aromatiques et d'alcools. A titre d'exemples de cétones, on peut notamment citer la méthyléthyle cétone, la méthylisobutyle cétone et la diisobutyle cétone, ainsi que la diacétone alcool. On

peut également citer le toluène, les naphtas à point éclair élevé; on utilise également des solvants comme le 2-méthoxyéthanol ou d'autres solvants analogues.

Les proportions relatives de solvant et de résine peuvent varier dans de larges limites qui dépendent de la méthode d'application.

La peinture primaire contient également les pigments usuels, généralement sous forme d'oxyde métallique. A titre d'exemples on peut notamment citer l'oxyde de titane, l'alumine, l'oxyde de zinc, chromate de strontium , phosphate de zinc et autres analogues. Le plus souvent la quantité de pigment représente de 15 à 20 % du poids total de la peinture, solvant compris.

La peinture primaire de l'invention est particulièrement appropriée pour les tôles revêtues. Aussi pour traiter les tôles, on étale une couche de peinture primaire de l'invention sur une épaisseur de 5 à 10 microns. Le temps de cuisson de la peinture est de 30 à 60 secondes pour des pics de température du métal de l'ordre de 200 à 250 °C. Sur la couche de peinture primaire on applique ensuite une couche de plastisol à haute résistance mécanique (comme expliqué plus avant). La couche de plastisol a une épaisseur comprise entre 100 et 250 microns. La couche de résine est soumise à cuisson avec un pic de température du métal pouvant varier entre 190 et 220 °C.

Les exemples suivants sont donnés afin de mieux illustrer les compositions de l'invention, mais sans pour autant en limiter la portée.

Exemple 1

On a préparé une composition de peinture primaire appropriée pour être appliquée dans le domaine de la tôle revêtue.

La liant de cette peinture était constitué de :
les pourcentages étant exprimés en poids et sur une base exempte de solvant

- polyméthacrylate de méthyle (PM indicatif = 75.000) 75 %
- résine phénolique 19 %
  de formule

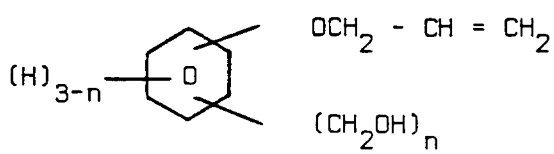

  (Produit vendu sous la dénomination ORSOL : mélange de composés pour lesquels n = 1 à 3)
- isophorone diisocyanate bloqué 5 %
  (teneur en NCO = 8 %)
  (Produit vendu sous la dénomination IPDI-B1370 de Chemische Werke Hüls)
- di-laurate de di-n-butylétain 1 %

Pour préparer la peinture primaire, on mélange la résine méthacrylique (prise à 30 % dans le toluène-butanol en rapport pondéral 9:1) avec un mélange de pigments comprenant de l'oxyde de titane et du chromate de strontium, et avec les additifs constitués par l'agent matant et une pâte d'argile (prise à 10 % dans le xylène). Le mélange obtenu est broyé pendant 20 minutes dans un broyeur à billes à une température maintenue à la température ambiante. A cette phase broyée, on a ajouté la résine phénolique, le polyisocyanate bloqué (pris à 60 % dans un solvant usuel) et le catalyseur. On a ajouté la diacétone alcool comme solvant.

La peinture primaire avait la composition finale suivante (en poids) :

| | | |
|---|---|---|
| Liant (sec) | | 17,5 % |
| Pigments | $TiO_2$ | 14,0 % |
| | Chromate de Sr | 3,5 % |
| Agent matant | | 0,8 % |
| Argile (sec) | | 0,09 % |
| Solvants | | 64,11 % |

On a appliqué cette peinture primaire sur une tôle, d'acier galvanisé, selon les indications données à l'exemple 4.

Exemple 2

On a suivi la même procédure que celle décrite à l'exemple 1 pour préparer la peinture primaire dont le liant a la composition suivante

- résine méthacrylique 65 %, consistant en un copolymère de poids moléculaire indicatif égal à 55.000 et préparé à partir de 85 % en poids de méthacrylate de méthyle et de 15 % en poids d'acrylate d'éthyle.
- résine phénolique liquide : 16 %, telle que décrite à l'exemple 1.
- isophorone diisocyanate bloqué 16 % comme décrit à l'exemple 1.
- di-laurate de di-n-butylétain 3 %.

On a préparé la peinture selon le mode opératoire décrit à l'exemple 1.

On a appliqué cette peinture sur une tôle, selon les conditions décrites à l'exemple 4.

Exemple 3

On a préparé plusieures peintures primaires selon la procédure décrite à l'exemple 1.

La composition des liants est décrite dans le tableau ci-après (exprimée en % en poids) :

| | 3A | 3B | 3C | 3D | 3E | PM indicatif |
|---|---|---|---|---|---|---|
| Résine méthacrylique méthacrylate de méthyle(MMA)/méthacrylate de butyle (90/10) | 78 | | | 81,0 | | 40.000 |
| MMA/acrylate d'éthyle (80/20) | | 70 | | | | 55.000 |
| méthacrylate de méthyle | | | 87,5 | | 67 | 75.000 |
| Résine phénolique liquide telle que décrite à l'exemple 1 | 19 | 17,5 | 10 | 9 | 29 | |
| isophorone diisocyanate bloqué | 2,5 | 10,5 | 2,2 | 9 | 3,5 | |
| di lauryl de di-n-butyl étain | 0,5 | 2 | 0,3 | 1 | 0,5 | |

On a préparé les peintures selon le mode opératoire décrit à l'exemple 1.

On a appliqué ces peintures sur des tôles selon les conditions décrites à l'exemple 4.

Exemple 4

On a appliqué les peintures primaires décrites aux exemples 1, 2 et 3 sur des tôles d'acier galvanisé ayant une épaisseur de 0,75 mm et traitées avec un agent usuel de prétraitement des tôles d'acier galvanisé.

Les tôles revêtues avec les différentes peintures primaires ont été placées, pendant une durée de 35 à 50 secondes, dans un four à air chaud pour obtenir des pics de température de métal de 210, 225 et 245 ° C. Les résultats obtenus dans ces trois cas sont similaires.

On les a ensuite laissé refroidir dans l'eau froide.

On a pris différents échantillons et sur une série, on a appliqué sur cette couche, une couche de 200 microns d'un plastisol à haute résistance mécanique (Plastisol A) et sur une autre série, on a appliqué un plastisol normal (plastisol B). La température pic du métal était de 200 ° C. Les caractéristiques des plastisols utilisés sont indiquées dans le tableau ci-dessous.

| | Plastisol A | Plastisol B |
|---|---|---|
| PVC | 63,2 % | 54,6 % |
| Plastifiant | 25,3 % | 33,5 % |
| Pigment | 11,5 % | 11,9 % |
| Plastifiant / PVC X 100 | 40 phr | 61 phr |
| Dureté Shore A | 92 | 75 |
| Elongation à la rupture | 186-204 % | 100-115 % |
| Résistance à la traction à la rupture | 16-17 $N/mm^2$ | 6-7 $N/mm^2$ |
| Elmendorf (ASTM D 1424-63) | 10-11 N. mm | 3-5 N. mm |

On a mesuré les propriété d'adhérence du système peinture primaire, plastisol, au moyen du test d'emboutissage Erichsen 8 mm.

| Peinture | Ex | | | | | | |
|---|---|---|---|---|---|---|---|
| | Ex1 | Ex2 | 3A | 3B | 3C | 3D | 3E |
| Plastisol A | 5/5 | 5/5 | 5/5 | 5/5 | 5/5 | 4/5 | 5/5 |
| Plastisol B | 5/5 | 5/5 | 5/5 | 5/5 | 5/5 | 5/5 | 5/5 |

A titre de comparaison, on a testé une peinture primaire usuelle de formule générale

| | |
|---|---|
| Résine polyméthylméthacrylate | 60 % |
| Résine Epoxy-phénolique | 13,3 % |
| Catalyseur acide phosphorique à 10 % dans un solvant | 10 % |
| Pigment | 16,4 % |
| Argile | 0,3 % |

On y a mélangé un solvant du type éthylglycol, de manière à ce qu'il représente 40 % du mélange total résine-solvant.

On a étalé la peinture primaire de la même manière et on a testé l'adhérence du système avec le plastisol A et le plastisol B.

Avec le plastisol A on a obtenu 0/5 sur Erichsen 8 mm
0/5 sur Erichsen 7 mm
0/5 sur Erichsen 5 mm
3/5 sur Erichsen 4 mm

Avec le plastisol B on a obtenu 5/5 sur Erichsen 8 mm

Ceci montre bien l'avantage des compositions de l'invention vis-à-vis des plastisols à haute résistance mécanique.

A titre indicatif, le test d'emboutissage Erichsen a été réalisé selon la méthode d'essai T6 de l'Association Européenne du Coil Coating (ECCA) pour les revêtements de la catégorie 2. La profondeur d'emboutissage était de 4,5 , 7 ou 8 mm selon les cas; la sévérité du test croissant avec cette profondeur.

L'adhérence est évaluée en fraction de la distance qui sépare le sommet de la base du dôme (5/5 = adhérence parfaite, 0/5 = pas d'adhérence).

Exemple 5

On a préparé une composition de peinture primaire, exempte de polyisocyanate bloqué et de catalyseur, en mélangeant, dans des proportions en poids calculées sur une base exempte de solvant, les composés suivants décrits à l'exemple 1 :

| exemple | 5 A | 5 B | 5 C |
|---|---|---|---|
| - polyméthacrylate de méthyle<br>- résine phénolique liquide | 90%<br>10% | 80%<br>20% | 70%<br>30% |

Le solvant et les pigments ont été ajoutés selon les conditions décrites à l'exemple 1.

On a appliqué les peintures primaires obtenues sur des tôles d'acier galvanisé de 0,75 mm d'épaisseur, pré-traitées avec un agent usuel de prétraitement des tôles d'acier galvanisé.

Les tôles revêtues ont été placées pendant 150 secondes dans un four à air chaud à 260 ° C . On les a ensuite laissé refroidir dans l'eau froide.

Une couche de 200 µm de plastisol a été appliquée ensuite dans les conditions décrites à l'exemple 4.

Avec les plastisols A et B, le test d'emboutissage Erichsen quadrillé 8 mm donnait une adhérence parfaite (5/5).

**Revendications**

**1.** Composition de peinture primaire adaptée aux revêtements formés de dispersions de résines vinyliques à haute résistance mécanique, comprenant des pigments usuels, un solvant et un liant constitué d'un mélange d'une résine (méth)acrylique thermoplastique et d'un dérivé phénolique ci-après "résine phénolique", caractérisée en ce que la résine phénolique est choisie parmi celles dont la formule générale est

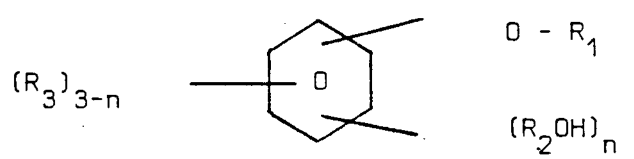

dans laquelle
$R_1$ est un radical allyle ou alkényle ayant de 4 à 7 atomes de carbone
$R_2OH$ est un radical hydroxyalkyle ayant de 1 à 6 atomes de carbone
$R_3$ est H ou un radical alkyle ayant de 1 à 3 atomes de carbone et n = 1 - 3

**2.** Composition selon la revendication 1 caractérisée en ce que la résine phénolique est présente en une quantité telle que le rapport résine (méth)acrylique/résine phénolique soit compris entre 90:10 et 70:30.

**3.** Composition selon l'une quelconque des revendications 1 et 2, caractérisée en ce que la quantité de résine (méth)acrylique thermoplastique dans le liant est d'au moins 50 % en poids.

**4.** Composition selon l'une quelconque des revendications 1 à 3 , caractérisée en ce qu'elle contient en plus un polyisocyanate bloqué, dont la teneur en groupement NCO est comprise entre 5 et 30 %, en une quantité telle que le rapport pondéral polyisocyanate bloqué/résine phénolique est compris entre 10:90 et 50:50.

**5.** Composition de peinture primaire et adaptée aux dispersions de résines vinyliques à haute résistance mécanique, comprenant une résine (méth)acrylique, une résine phénolique, des pigments usuels, un catalyseur usuel de formation de polyuréthane et un solvant, caractérisée en ce que le liant de cette peinture est constitué de

- une résine (méth)acrylique thermoplastique pour une majeure partie
- une résine phénolique choisie parmi celles dont la formule générale est

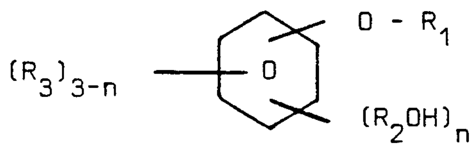

dans laquelle
$R_1$ est un radical allyle ou alkényle ayant de 4 à 7 atomes de carbone
$R_2OH$ est un radicalhydroxyalkyle ayant de 1 à 6 atomes de carbone,
$R_3$ est H ou un radical alkyle ayant de 1 à 3 atomes de carbone et n = 1 - 3,
et utilisée en une quantité telle que le rapport pondéral résine (méth)acrylique/résine phénolique est compris entre 90:10 et 70:30.
- un polyisocyanate bloqué,dont la teneur en groupements NCO est comprise entre 5 et 30 %, utilisé en une quantité telle que le rapport pondéral polyisocyanate bloqué/résine phénolique est compris entre 10:90 et 50:50.
- un catalyseur usuel de formation de polyuréthane par réaction du polyisocyanate bloqué et de la résine phénolique, utilisé en une quantité telle qu'elle représente de 5 à 33 % en poids du polyisocyanate bloqué.

**6.** Composition selon la revendication 5 caractérisée en ce que la résine phénolique est utilisée en une quantité telle que le rapport pondéral résine méthacrylique/résine phénolique est compris entre 80:20 et 75:25.

**7.** Composition selon l'une quelconque des revendications 5 à 6 caractérisée en ce que le polyisocyanate bloqué est utilisé en une quantité telle que le rapport pondéral polyisocyanate bloqué/résine phénolique est compris entre 20:80 et 30:70.

**8.** Composition selon l'une quelconque des revendications 5 à 7, caractérisée en ce que la résine (méth)-acrylique est choisie dans le groupe comprenant les polymères de méthacrylate d'alkyle et les copolymères de méthacrylate d'alkyle et d'un monomère à insaturation éthylénique.

**9.** Composition selon la revendication 8, caractérisée en ce que la résine méthacrylique est choisie parmi les copolymères contenant au moins 75 % en poids de méthacrylate de méthyle et au plus 25 % d'un comonomère choisi parmi l'acrylate d'éthyle, le méthacrylate de butyle, le méthacrylate d'isobutyle et autres analogues.

**10.** Composition selon l'une quelconque des revendications 5 à 9, caractérisée en ce que le polyisocyanate formant le polyisocyanate bloqué est choisi parmi les polyisocyanates cycloaliphatiques dont le radical cycloaliphatique possède de 4 à 10 atomes de carbone, le triméthylhexaméthylène diisocyanate, l'hexaméthylène diisocyanate dimère ou trimère, le toluène diisocyanate, le méthylène diisocyanate, et est utilisé de préférence en une quantité telle que le rapport pondéral polyisocyanate/ résine phénolique soit compris entre 20:80 et 30:70.

**11.** Composition selon la revendication 10, caractérisée en ce que le polyisocyanate bloqué est l'isophorone diisocyanate bloqué.

**12.** Composition selon l'une quelconque des revendications 5 à 11 caractérisée en ce que le catalyseur usuel de formation de polyuréthane est de préférence choisi parmi le di-laurate de di-n-butyle étain, le di-stéarate de di-n-butyl étain, le dioleate de di-n-butyle étain, le di-oxalate de di-n-butyle étain, le diisodecanoate de di-n-butyle étain et le diacétate de di-n-butyle étain.

**13.** Peinture primaire dont le liant est décrit dans l'une quelconque des revendications 1 à 12.

**Claims**

1. Primer coating composition suited to coatings consisting of dispersions of vinyl resins with high mechanical strength, comprising usual pigments, a solvent and a binder composed of a mixture of a thermoplastic (meth)acrylate resin and a phenol derivative, referred to hereinafter as "phenolic resin", characterised in that the phenolic resin is chosen from those of general formula

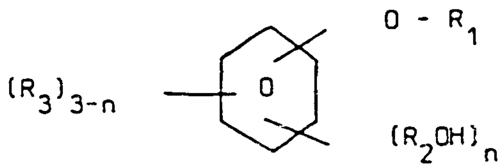

wherein
$R_1$ is an allyl or alkenyl radical having 4 to 7 carbon atoms,
$R_2OH$ is a hydroxyalkyl radical having 1 to 6 carbon atoms,
$R_3$ is H or an alkyl radical having 1 to 3 carbon atoms and n = 1 - 3.

2. Composition according to claim 1, characterised in that the phenolic resin is present in a quantity such that the ratio of (meth)acrylate resin to phenolic resin is between 90:10 and 70:30.

3. Composition according to either one of claims 1 and 2, characterised in that the quantity of thermoplastic (meth)acrylate resin in the binder is not less than 50 % by weight.

4. Composition according to any one of claims 1 to 3, characterised in that it additionally contains a blocked polyisocyanate with an NCO group content of between 5 and 30%, in a quantity such that the weight ratio of blocked polyisocyanate to phenolic resin is between 10:90 and 50:50.

5. Primer coating composition suited to high mechanical strength vinyl resin dispersions, comprising a (meth)acrylate resin, a phenolic resin, usual pigments, a usual polyurethane-forming catalyst and a solvent, characterised in that the binder of this coating is composed of:
- a thermoplastic (meth)acrylate resin for the greater part;
- a phenolic resin chosen from those of general formula:

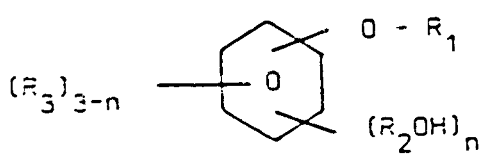

  wherein
  $R_1$ is an allyl or alkenyl radical having 4 to 7 carbon atoms,
  $R_2OH$ is a hydroxyalkyl radical having 1 to 6 carbon atoms,
  $R_3$ is H or an alkyl radical having 1 to 3 carbon atoms and n = 1 - 3, and used in a quantity such that the weight ratio of (meth)acrylate resin to phenolic resin is between 90:10 and 70:30;
- a blocked polyisocyanate with an NCO group content of between 5 and 30%, used in a quantity such that the weight ratio of blocked polyisocyanate to phenolic resin is between 10:90 and 50:50;
- a usual polyurethane forming catalyst by reaction of the blocked polyisocyanate and the phenolic resin, used in a quantity such that it represents from 5 to 33 % by weight of the blocked polyisocyanate.

6. Composition according to claim 5, characterised in that the phenolic resin is used in a quantity such that the weight ratio of methacrylic resin to phenolic resin is between 80:20 and 75:25.

7. Composition according to either one of claims 5 and 6, characterised in that the blocked polyisocyanate is used in a quantity such that the weight ratio of blocked polyisocyanate to phenolic resin is between

20:80 and 30:70.

**8.** Composition according to any one of claims 5 to 7, characterised in that the (meth)acrylate resin is chosen from the group comprising polymers of alkyl methacrylate and copolymers of alkyl methacrylate and of an ethylenically unsaturated monomer.

**9.** Composition according to claim 8, characterised in that the methacrylic resin is chosen from copolymers containing not less than 75 % by weight of methyl methacrylate and not more than 25 % of a comonomer chosen from ethyl acrylate, butyl methacrylate, isobutyl methacrylate and other analogues.

**10.** Composition according to any one of claims 5 to 9, characterised in that the polyisocyanate forming the blocked polyisocyanate is chosen from cycloaliphatic polyisocyanates whose cycloaliphatic radical possesses from 4 to 10 carbon atoms, trimethyl hexamethylene diisocyanate, dimer or trimer hexamethylene diisocyanate, toluene diisocyanate and methylene diisocyanate, and is preferably used in a quantity such that the weight ratio of polyisocyanate to phenolic resin is between 20:80 and 30:70.

**11.** Composition according to claim 10, characterised in that the blocked polyisocyanate is blocked isophorone diisocyanate.

**12.** Composition according to any one of claims 5 to 11, characterised in that the usual polyurethane-forming catalyst is preferably chosen from tin di-n-butyl dilaurate, tin di-n-butyl distearate, tin di-n-butyl dioleate, tin di-n-butyl dioxalate, tin di-n-butyl diiosodecanoate and tin di-n-butyl diacetate.

**13.** Primer coating whose binder is described in any one of claims 1 to 12.

**Patentansprüche**

**1.** Grundierungsanstrichzusammensetzung, die für Beschichtungen aus Vinylharzdispersionen hoher mechanischer Festigkeit geeignet ist und aus gebräuchlichen Pigmenten, einem Lösemittel und einem Bindemittel besteht, das aus einer Mischung aus einem thermoplastischen (Meth)acrylharz und einem Phenolderivat (im nachstehenden "Phenolharz" genannt), dadurch gekennzeichnet, daß das Phenolharz aus denjenigen ausgewählt ist, die die allgemeine Formel haben:

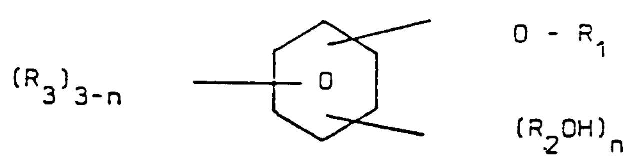

in der

| | |
|---|---|
| $R_1$ | ein Allyl- oder Alkenylrest mit 4 bis 7 Kohlenstoffatomen, |
| $R_2OH$ | ein Hydroxyalkylrest mit 1 bis 6 Kohlenstoffatomen, |
| $R_3$ | Wasserstoff oder ein Alkylrest mit 1 bis 3 Kohlenstoffatomen und |
| n = | 1 - 3 ist. |

**2.** Zusammensetzung nach Anspruch 1, dadurch gekennzeichnet, daß das Phenolharz in einer solchen Menge vorgesehen ist, daß das Verhältnis von (Meth)acrylharz zu Phenolharz 90:10 bis 70:30 beträgt.

**3.** Zusammensetzung nach einem der Ansprüche 1 und 2, dadurch gekennzeichnet, daß die Menge des thermoplastischen (Meth)acrylharzes in dem Bindemittel mindestens 50 Gew.-% beträgt.

**4.** Zusammensetzung nach einem der Ansprüche 1 bis 3, dadurch gekennzeichnet, daß sie außerdem ein blockiertes Polyisocyanat, dessen Gehalt an NCO-Gruppen 5 bis 30 % beträgt, in einer solchen Menge enthält, daß das Gewichtsverhältnis von blockiertem Polyisocyanat zu Phenolharz 10:90 bis 50:50 beträgt.

5. Grundierungsanstrichzusammensetzung, die für Vinylharzdispersionen hoher mechanischer Festigkeit geeignet ist und (Meth)acrylharz, ein Phenolharz, gebräuchliche Pigmente, einen gebräuchlichen Katalysator zur Bildung von Polyurethan und ein Lösemittel enthält, dadurch gekennzeichnet, daß das Bindemittel des Grundierungsanstrichs besteht aus:
   - zu einem größeren Teil aus einem thermoplastischen (Meth)acrylharz,
   - einem Phenolharz, das aus denjenigen ausgewählt ist, die die allgemeine Formel haben:

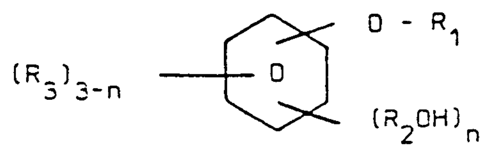

in der

| | |
|---|---|
| $R_1$ | ein Allyl- oder Alkenylrest mit 4 bis 7 Kohlenstoffatomen, |
| $R_2OH$ | ein Hydroxyalkylrest mit 1 bis 6 Kohlenstoffatomen, |
| $R_3$ | Wasserstoff oder ein Alkylrest mit 1 bis 3 Kohlenstoffatomen und |
| n = | 1 - 3 ist, |

und in einer solchen Menge benutzt wird, daß das Gewichtsverhältnis von (Meth)acrylharz zu Phenolharz 90:10 bis 70:30 beträgt,
   - einem blockierten Polyisocyanat, dessen Gehalt an NCO-Gruppen 5 bis 30 % beträgt und das in einer solchen Menge benutzt wird, daß das Gewichtsverhältnis von blockiertem Polyisocyanat zu Phenolharz 10:90 bis 50:50 beträgt,
   - einem gebräuchlichen Katalysator zur Bildung von Polyurethan durch Reaktion des blockierten Polyisocyanats und des Phenolharzes, der in einer solchen Menge benutzt wird, daß er 5 bis 33 Gew.-% des Polyisocyanats ausmacht.

6. Zusammensetzung nach Anspruch 5, dadurch gekennzeichnet, daß das Phenolharz in einer solchen Menge verwendet wird, daß das Gewichtsverhältnis von Methacrylharz zu Phenolharz 80:20 bis 75:25 beträgt.

7. Zusammensetzung nach einem der Ansprüche 5 bis 6, dadurch gekennzeichnet, daß das blockierte Polyisocyanat in einer solchen Menge benutzt wird, daß das Gewichtsverhältnis von blockiertem Polyisocyanat zu Phenolharz 20:80 bis 30:70 beträgt.

8. Zusammensetzung nach einem der Ansprüche 5 bis 7, dadurch gekennzeichnet, daß das (Meth)-acrylharz aus der Gruppe ausgewählt ist, die Alkylmethacrylatpolymere und Copolymere aus Alkylmethacrylat und einem ethylenisch ungesättigten Monomer umfaßt.

9. Zusammensetzung nach Anspruch 8, dadurch gekennzeichnet, daß das Methacrylharz aus den Copolymeren ausgewählt ist, die mindestens 75 Gew.-% Methylmethacrylat und höchstens 25 % eines Comonomers enthalten, das aus Ethylacrylat, Butylmethacrylat, Isobutylmethacrylat und anderen ähnlichen ausgewählt ist.

10. Zusammensetzung nach einem der Ansprüche 5 bis 9, dadurch gekennzeichnet, daß das das blockierte Polyisocyanat bildende Polyisocyanat aus den cycloaliphatischen Polyisocyanaten, deren cycloaliphatischer Rest 4 bis 10 Kohlenstoffatome besitzt, dem Trimethylhexamethylendiisocyanat, dem dimeren oder trimeren Hexamethylendiisocyanat, dem Toluoldiisocyanat, dem Methylendiisocyanat ausgewählt ist und vorzugsweise in einer solchen Menge benutzt wird, daß das Gewichtsverhältnis von Polyisocyanat zu Phenolharz 20:80 bis 30:70 beträgt.

11. Zusammensetzung nach Anspruch 10, dadurch gekennzeichnet, daß das blockierte Polyisocyanat blockiertes Isophorondiisocyanat ist.

12. Zusammensetzung nach einem der Ansprüche 5 bis 11, dadurch gekennzeichnet, daß der gebräuchliche Katalysator zur Bildung von Polyurethan vorzugsweise aus Di-n-butylzinn-dilaurat, Di-n-butylzinn-distearat, Di-n-butylzinn-dioleat, Di-n-butylzinn-dioxalat, Di-n-butylzinn-diisodecanoat und Di-n-butylzinn-diacetat ausgewählt ist.

**13.** Grundierungsanstrich, dessen Bindemittel in einem der Ansprüche 1 bis 12 beschrieben ist.